# EUROPEAN PATENT APPLICATION

(11) **EP 3 032 917 A1**
(43) Date of publication of application: **15.06.2016**
(21) Application number: 15199893.7
(22) Date of filing: 14.12.2015
(51) Int. Cl.: H05B 6/12

(54) **COOKING ASSEMBLY OF A COOKING WORKTOP AND ONE OR MORE INDUCTION COOKING DEVICES, AND A COOKING WORKTOP**

(30) Priority: 12.12.2014 NL 2013963
(71) Applicant: Groku Kampen B.V., 8263 AE Kampen (NL)
(72) Inventor: De Haan, Wouter Bastiaan, 8044 JJ Zwolle (NL); Den Besten, Klaas, 8081 SM Elburg (NL); Gielleit, Mark Clemens, 8315 AJ Luttelgeest (NL)
(74) Representative: Mink-Lindenburg, Charlotte Hildegard

(57) **Abstract**

The invention relates to a cooking assembly of a cooking worktop and one or more induction cooking devices, each comprising one or more electric coils, wherein each induction cooking device is disposed on an underside of the cooking worktop such that the one or more electric coils are situated close to the underside of the cooking worktop.

The invention also relates to a cooking worktop for application in a cooking assembly according to the invention.

## Description

The invention relates to a cooking assembly of a cooking worktop and one or more induction cooking devices, each comprising one or more electric coils, wherein each induction cooking device is disposed on an underside of the cooking worktop such that the one or more electric coils are situated close to the underside of the cooking worktop.

A cooking assembly according to the preamble is known in the field. The known cooking assembly is described in the American patent application US 2005/0006379. The known cooking assembly makes it possible in theory to manufacture an invisible stove, wherein pans are placed directly onto the cooking worktop so as to be heated by the induction cooking device.

The invention has for its object to provide a cooking assembly according to the preamble with an improved operation.

The cooking assembly according to the invention has for this purpose the feature that the cooking worktop is provided on the underside with one or more recesses, wherein each recess is configured to receive at least a part of an induction cooking device. The invention is based on the insight that, at a usual thickness of a cooking worktop, it will be found in practice that the magnetic field generated by the coil is not properly able to penetrate through the cooking worktop. Because of the recess the cooking worktop has a lesser thickness at the position of the induction cooking device and the magnetic field generated by the coil is properly able to pass through the cooking worktop, thereby resulting in an efficiently operating stove assembly.

In a first preferred embodiment of the cooking assembly according to the invention at least one of the recesses is configured to receive at least one coil of an induction cooking device. Any recess in the cooking worktop reduces the strength of the cooking worktop, whereby the reduction in strength depends on the size of the recess. As a result of this measure the recess can be given a smaller form, whereby the strength of the cooking worktop is less adversely affected.

In a second preferred embodiment at least one of the recesses is embodied without angles. When the cooking worktop is loaded, an angle provides for a sharp distribution of force around the angles of the recess in the cooking worktop. As a result of this force distribution it is possible for a cooking worktop to break.
Embodying the recess without angles reduces the chance of a cooking worktop breaking under load. As the cooking worktop heats up during use of the induction cooking device the absorbed heat will also be better distributed as a result of the recess without angles. The chance of the material of the cooking worktop beginning to break off is hereby also reduced.

In a further development of the second preferred embodiment of the cooking assembly according to the invention at least one of the recesses is round. The recess has a size here such that a coil of the induction cooking device can be accommodated.

The recess becomes arcuate by at least one of the recesses being given a concave form on an upper side. The transverse load on the cooking worktop allowed relative to the reduced thickness thereof at the position of the recess can hereby be increased in advantageous manner

The cooking worktop preferably has a maximum thickness of ± 12 millimetres at the position of each recess. It is found in practice that the generated magnetic field is easily able to pass through the cooking worktop at this thickness of the cooking worktop.

The cooking worktop of the known cooking assembly can be manufactured from granite, slate, concrete, quartz, silestone or zodiac. Although these materials are heat-resistant, in the case of large temperature differences (for instance when placing a very hot pan on a cold cooking worktop) a so-called thermoshock can occur, this causing irreversible damage. In addition, ageing phenomena can occur in the course of time as a result of the local heating, whereby material breaks off the cooking worktop.

In order to obviate these drawbacks of the known cooking worktop the cooking worktop of the cooking assembly according to the invention is preferably manufactured from a composite material. The chosen composite material must here be able to withstand thermoshock and the alternating local heating or cooling of the material.

The cooking worktop is preferably composed here of at least silicate aluminates, amorphous silica, crystalline silica, zircon and/or inorganic pigments.

Providing a cooking worktop with a porosity of a maximum of 0.2% in the cooking assembly according to the invention can prevent material breaking off the cooking worktop in the course of time as a result of the local heating.

A highly suitable material for application in the cooking worktop in the cooking assembly according to the invention is Dekton®, which is produced and marketed by the company Cosentino®.

The invention also relates to a cooking worktop for application in a cooking assembly according to the invention.

The invention will be further elucidated with reference to the following figures, in which:
Figure 1 shows a cross-section of a first embodiment of a cooking assembly according to the invention;
Figure 2 shows a cross-section of a second embodiment of a cooking assembly according to the invention;
Figure 3 shows a bottom view of a possible embodiment of the cooking worktop for application in the cooking assembly according to figure 1 or 2;
Figure 4 shows a bottom view of an alternative possible embodiment of the cooking worktop for application in the cooking assembly according to figure 1 or 2; and
Figure 5 shows a cross-section of a third embodiment of a cooking assembly according to the invention.

The same components are designated in the figures with the same numerals.

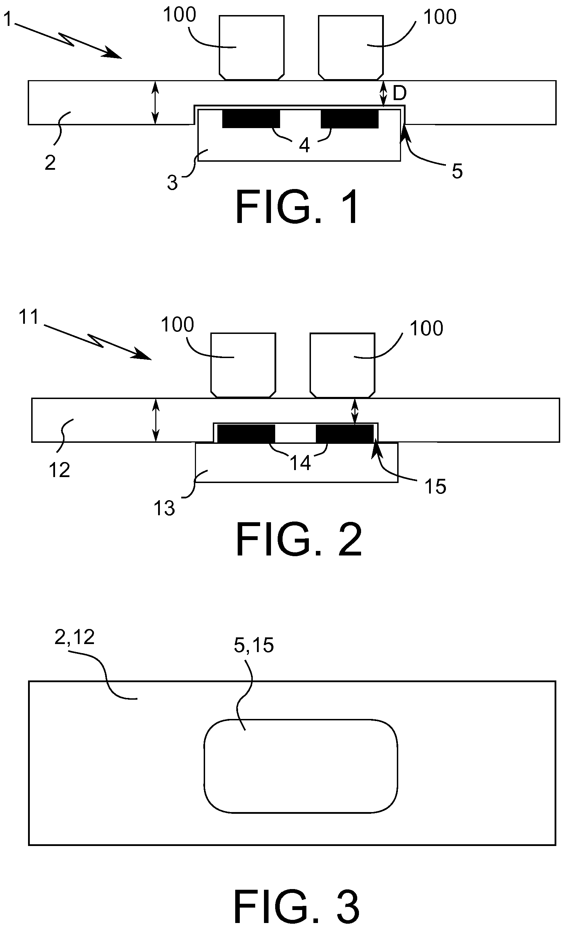

Figure 1 shows a cross-section of a first embodiment of a cooking assembly 1 according to the invention. Cooking assembly 1 comprises a cooking worktop 2 and an induction cooking device 3. Induction cooking device 3 comprises a plurality of electric coils 4. Induction cooking device 3 is disposed in a recess 5 on an underside of cooking worktop 2.

The recess (or rebate or channel) 5 is situated only on the underside of the cooking worktop and does not form a continuous opening through the cooking worktop. The thickness D of cooking worktop 2 at the position of recess 5 is preferably a maximum of 12 millimetres. Using the cooking assembly 1 it is possible to place a pan 100 directly onto cooking worktop 2, after which the pan can be heated through cooking worktop 2 using the induction cooking device 3.

Figure 2 shows a cross-section of a second embodiment of cooking assembly 11 according to the invention. Induction cooking device 13 comprises a plurality of electric coils 14. Induction cooking device 13 is disposed in a recess 15 on an underside of cooking worktop 12, wherein only the coils 14 are received in recess 15. The thickness D of cooking worktop 12 at the position of recess 15 is preferably a maximum of 12 millimetres.

Figure 3 shows a bottom view of a possible embodiment of cooking worktop 2 or cooking worktop 12 for application in the cooking assembly according to the invention. A recess 5, 15 or a channel is arranged in cooking worktop 2, 12, wherein recess 5, 15 is without angles.

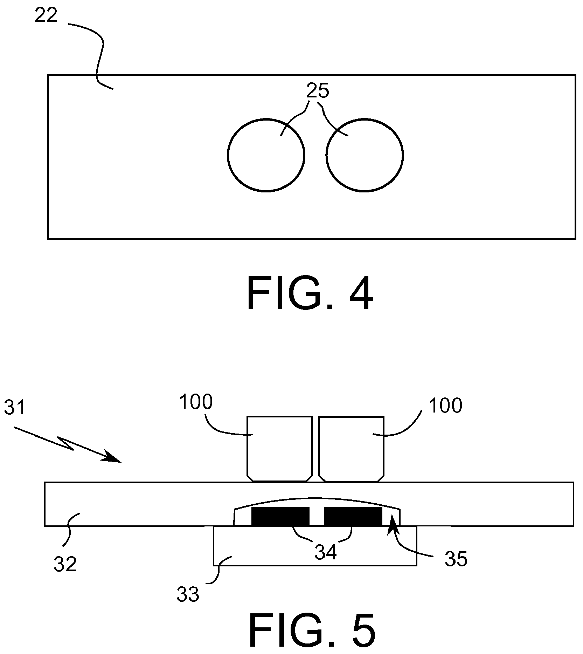

Figure 4 shows a bottom view of another possible embodiment of a cooking worktop 22 for application in the cooking assembly according to the invention. Arranged in cooking worktop 22 are recesses 25 in which only the round coil of an induction cooking device is placeable.

Figure 5 shows a cross-section of a third embodiment of cooking assembly 31 according to the invention. Induction cooking device 33 comprises a plurality of electric coils 34. Induction cooking device 33 is disposed in a recess 35 on an underside of cooking worktop 32. Recess 35 has a concave upper side.

Suitable materials for the kitchen worktop must generally be able to withstand repeated heating and cooling and have to be machinable so that recesses can be arranged therein. Examples hereof are composite materials which preferably have a porosity of a maximum of 0.2% and/or are composed of at least silicate aluminates, amorphous silica, crystalline silica, zircon and/or inorganic pigments.

Particularly suitable composite materials are composite materials which have undergone a treatment with a so-called Particle Sintering Technology method. This method is described for instance in the international patent application WO2014009585. The method has the object of realizing an accelerated version of the metamorphic changes which natural stone undergoes through thousands of years of exposure to high pressure and high temperatures.

An example of a composite material manufactured with Particle Sintering Technology is Dekton® from the company Cosentino®.

In the context of this invention a cooking worktop is understood to mean a work area (worktop or table) on which pans can be placed for the purpose of heating the content thereof. An example of a cooking worktop is a kitchen worktop such as a counter top. The cooking worktop can however also be located outside the kitchen, for instance for the purpose of heating food in a dining room of a restaurant, hotel or canteen.

The number of induction coils in the shown figures is not limitative for the scope of protection sought. Any number of induction coils can be arranged in the cooking assembly depending on the application.

The invention therefore extends to any embodiment falling within the scope of protection as defined in the claims and as seen in the light of the foregoing description and accompanying drawings.

The invention extends to all possible combinations of the shown embodiments.

## Claims

1. Cooking assembly comprising a cooking worktop and one or more induction cooking devices which each comprise one or more electric coils and are intended to be disposed under the cooking worktop such that the one or more electric coils are situated close to the underside of the cooking worktop, **characterized in that** the cooking worktop is provided on the underside with one or more recesses, wherein each recess is configured to receive at least a part of an induction cooking device.

2. Cooking assembly as claimed in claim 1, **characterized in that** at least one of the recesses is configured to receive at least one coil of an induction cooking device.

3. Cooking assembly as claimed in claim 1 or 2, **characterized in that** at least one of the recesses is without angles.

4. Cooking assembly as claimed in any of the foregoing claims, **characterized in that** at least one of the recesses is round.

5. Cooking assembly as claimed in any of the foregoing claims, **characterized in that** at least one of the recesses is concave on an upper side.

6. Cooking assembly as claimed in any of the foregoing claims, **characterized in that** the cooking worktop has a maximum thickness of ± 12 millimetres at the position of each recess.

7. Cooking assembly as claimed in any of the foregoing claims, **characterized in that** the cooking worktop is manufactured from a composite material.

8. Cooking assembly as claimed in claim 7, **characterized in that** the cooking worktop is composed of at least silicate aluminates, amorphous silica, crystalline silica, zircon and/or inorganic pigments.

9. Cooking assembly as claimed in claim 7 or 8, **characterized in that** the cooking worktop has a porosity of a maximum of 0.2%.

10. Cooking assembly as claimed in claim 7, 8 or 9, **characterized in that** the material is manufactured substantially from Dekton®.

11. Cooking worktop as described as component of a cooking assembly as claimed in any of the foregoing claims.
